Europäisches Patentamt

European Patent Office

Office européen des brevets

(19)

(11) Publication number: **0 138 164 B1**

(12)                **EUROPEAN PATENT SPECIFICATION**

(45) Date of publication of patent specification: **04.09.91**   (51) Int. Cl.5: **H04N 5/91, H04N 5/95, H04N 9/89, H04N 5/93**

(21) Application number: **84111904.3**

(22) Date of filing: **04.10.84**

(54) Method and apparatus for sampling and processing a video signal.

(30) Priority: **14.10.83 JP 190761/83**
            **26.06.84 JP 131699/84**

(43) Date of publication of application:
    **24.04.85 Bulletin 85/17**

(45) Publication of the grant of the patent:
    **04.09.91 Bulletin 91/36**

(84) Designated Contracting States:
    **AT DE FR GB IT**

(56) References cited:
    **EP-A- 0 166 428**      **US-A- 3 639 689**
    **US-A- 4 065 787**      **US-A- 4 090 215**
    **US-A- 4 110 785**      **US-A- 4 373 168**

(73) Proprietor: **HITACHI, LTD.**
    **6, Kanda Surugadai 4-chome**
    **Chiyoda-ku, Tokyo 100(JP)**

(72) Inventor: **Furuhata, Takashi**
    **4495-32 Totsuka-cho Totsuka-ku**
    **Yokohama-shi Kanagawa-ken(JP)**
    Inventor: **Owashi, Hitoaki**
    **Hitachi-Totsuka-ryo 1745 Totsuka-cho**
    **Totsuka-ku**
    **Yokohama-shi Kanagawa-ken(JP)**
    Inventor: **Hibi, Michio**
    **Hitachi-Totsuka-ryo 1745 Totsuka-cho**
    **Totsuka-ku**
    **Yokohama-shi Kanagawa-ken(JP)**

(74) Representative: **Altenburg, Udo, Dipl.-Phys. et al**
    **Patent- und Rechtsanwälte Bardehle-Pagenberg-Dost-Altenburg & Partner Postfach 86 06 20**
    **W-8000 München 86(DE)**

## Description

This invention relates to a method and an apparatus for sampling, quantizing and processing a video signal, especially a method and an apparatus that can minimize a deterioration of picture quality accompanied with the quantization.

There are many types of the apparatus for processing the video signal in the prior art. For example, there are an apparatus for converting the video signal into a digital signal, an apparatus for memorizing the video signal of one field or one frame and processing it, an apparatus for filtering the video signal or compensating it by using a line memory, an apparatus for eliminating a time base fluctuation of the video signal by a buffer memory, an apparatus for time-compressing the video signal and transmitting it on a time-division multiplex system, further an apparatus for band-compressing a high defined video signal and transmitting it on the time-division multiplex system, etc.

In all these cases, it is indispensable to sample and quantize the video signal by using sampling clock pulses and sequentially process it at each sampling value. In order to produce the sampling clock pulses, it is known as the most simple method to use asynchronous and independent pulses to the video signal. However, this method has some problems, for example, in the apparatus using the buffer memory, time base flucluations generate in a processed video signal according to quantizing errors on the time base due to an asynchronism between the video signal and the sampling clock pulses, and in an apparatus for time-compressing and expanding the video signal, the quantizing errors are magnified so that the quality of a picture reproduced from the processed video signal becomes very inferior.

Further, as a band of the video signal is broad, it is necessary to make a frequency of the sampling clock pulses enough high, but it is impossible to do so, because there is a limit of working speed of hard devices. Therefore, the sampling clock frequency becomes near the video signal band, so that a spurious generates due to a folding as an essential problem. As the spurious becomes moire noise in a reproduced picture, it is necessary to restrict the video signal band sufficiently and rapidly before processing the video signal. However, the rapid restriction of the band gives rise to a delay distortion and as a result, a waveform distortion, for example, a ringing generates.

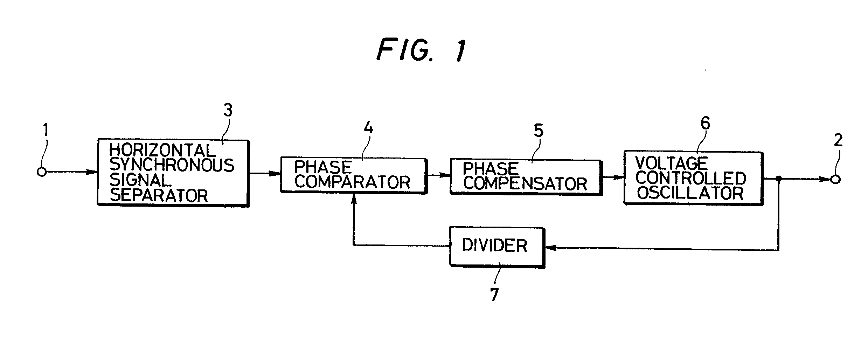

Another method, which uses an automatic frequency controlled circuit (hereinafter AFC circuit) as shown in Fig.1, is well known for producing the sampling clock pulses. Referring to Fig.1, the numerals 1 and 2 denote an input terminal of the video signal and an output terminal of the sampling clock pulses. A horizontal synchronous signal is separated from the input video signal by a horizontal synchronous signal separator 3 and supplied to one input terminal of a phase comperator 4. The numeral 6 designates a voltage controlled oscillator (hereinafter, VCO), an output signal of which is divided by a divider. The divider 7 produces an output signal having the same frequency as a horizontal scanning frequency of the input video signal. The output signal thereof is phase- compared with the horizontal synchronous signal by the phase comparator 4, and an error voltage in response to a phase difference of the both signals is output and supplied to the VCO6 as a control voltage.

The AFC circuit, which is constructed as described above, supplies the sampling clock pulses synchronized with the input video signal from the output terminal 2. As this prior method bases on a feedback control, it has some problems. For example, a phase fluctuation of the sampling clock pulses remains due to a circuit disturbance. If the dividing ratio of the divider 7 becomes large, a phase distance between the sampling clock pulses and the horizontal synchronous signal becomes large, so that the remain of the phase fluctuation becomes large, too.

Further, if the input video signal has the time base fluctuation, a follow-up error of the AFC circuit generates. If the response speed of the AFC circuit is raised in order to enhance the follow-up ability thereof, the AFC circuit becomes to have high response to noises contained in the input video signal. As a result, the AFC circuit becomes unstable.

Also if the time base fluctuation of the input video signal becomes large, the AFC circuit deviates from the synchronous drawing range, so that it becomes inoperative.

Following prior art documents describe the controlling of an oscillating system:

US-A-4 090 215 shows oscillators with only a feedback control having no mode of a feed forward control.

US-A-4 373 168 two controls are applied to a VCO. The feed forward control is performed by a ONE-CYCLE BURST GATE and the feedback control is performed by a PHASE COMPARATOR. In the arrangement of this document both controls are always effective, so that one control works as the disturbance to the other control.

Accordingly, it is an object of the present invention to provide a method and an apparatus for processing the video signal, which can suppress the deterioration of the picture quality due to the quantization of the video signal on the time base.

It is another object of the present invention to provide a method and an apparatus for surely eliminating the time base fluctuation of the video signal.

These objects are achieved by the subject-matter set out in the claims.

Briefly, to attain the above mentioned objects, according to the present invention, the sampling clock pulse is produced from an oscillating output signal of an oscillator which is instantaneously phase-synchronized with a synchronous information of the input video signal. Further, according to the present invention, during a vertical blanking period, the oscillating frequency thereof is stabilized by a feedback loop comprising a phase comparator, which phase-compares the oscillating output signal or a divided signal thereof with a reference signal having a constant frequency or a divided signal thereof, and a VCO means which controls the oscillating frequency in response to a phase error signal from the phase comparator.

Fig.1 is a block diagram representation of an AFC circuit for producing a sampling clock pulse according to the prior art,

Fig.2 is a block diagram representation of an apparatus for producing a sampling clock pulse according to an embodiment of the present invention,

Fig.3 illustrates waveforms of signals in accordance with Fig.2,

Fig.4 is a block diagram representation of an apparatus for processing a video signal as a comb-filter according to an embodiment of the present invention,

Fig.5 is a circuit diagram of an oscillator in accordance with Fig.2,

Fig.6 is a block diagram representation of an apparatus for producing a sampling clock pulse according to another embodiment of the present invention,

Fig.7 illustrates waveforms of signals in accordance with Fig.6,

Fig.8 is a block diagram representation of an apparatus for correcting a time base fluctuation of a video signal according to an embodiment of the present invention, and

Fig.9 is a block diagram representation of an apparatus for correcting the time base fluctuation using an outer synchronous signal according to another embodiment of the present invention.

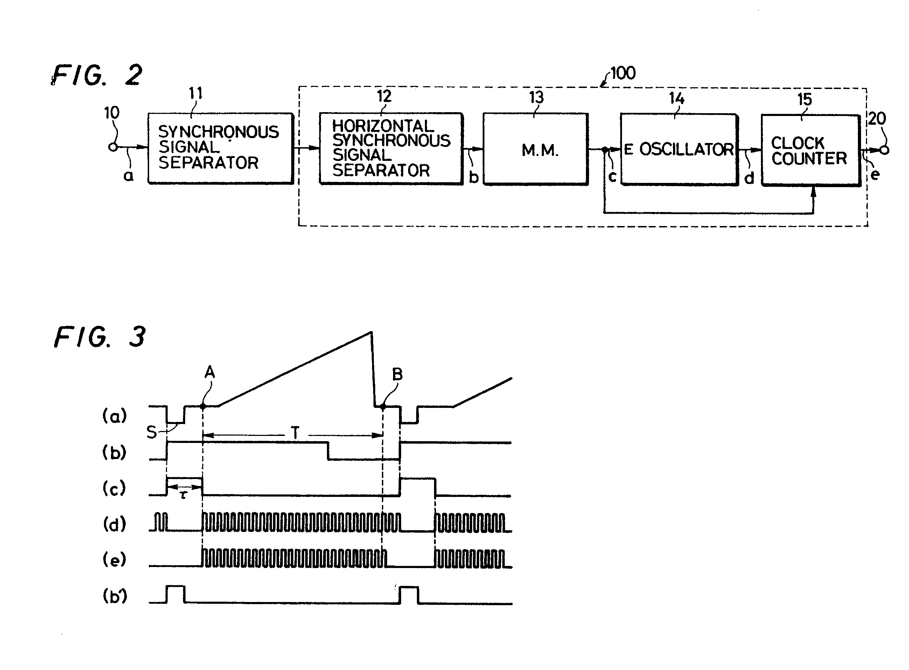

Referring to Fig.2, the numerals 10 and 20 denote an input terminal of a video signal and an output terminal of a sampling clock pulse, respectively. The numeral 100 designates a sampling clock generator. A synchronous signal separator 11 separates a synchronous signal from the input video signal, which is shown as a waveform (a) in Fig.3 and contains the synchronous signal S.

A horizontal synchronous signal separator $\overline{12}$ separates a synchronous signal related to a horizontal scanning from an output signal of the separator 11 and shown as a waveform (b) in Fig.3. The numeral 13 designates a monostable multivibrator (hereinafter, M.M.), which is triggered by an output signal of the separator 12 and supplies a start pulse having a fixed width $\tau$, as shown as a waveform (c) in Fig.3. The numeral 14 denotes an oscillator, which starts and ceases an oscillation in response to the start pulse from the M.M.13. The oscillator 14 is constructed by a IC of a M.M. type oscillator having an enable terminal, for example, SN74S124N produced by Texas Instruments Inc.. As apparently from a waveform (d) in Fig.3, the output signal thereof becomes low (hereinafter "L") in the case that the start pulse supplid to the enable terminal E thereof is high (hereinafter "H"), and sequential oscillating output pulses are obtained in the case that the start pulse is "L".

The output signal of the oscillator 14 is supplied to a clock counter 15, which starts to count the oscillating output pulses by the start pulse from the M.M.13 and outputs them during a constant period T as shown as a waveform (e) in Fig. 3. The output signal thereof is delivered to the output terminal 20 as a sampling clock pulse. The width $\tau$ of the start pulse and the period T are appropriately determined so that a start point and a final point of the sampling clock pulse, which are shown as points A and B of the waveform (a), respectively, are located within a horizontal blanking period of the input video signal. Therefore, the sampling clock pulse, which is necessary and sufficient for processing the input video signal, can be obtained.

Further, apparently from the above mentioned explanation, as the sampling clock pulse is generated by instantaneously phase-synchronizing with the synchronous signal of the input video signal, the time base fluctuation due to the sampling quantization does not generate, the sampling clock pulse can be obtained without an influence of the time base fluctuation thereof, and further, the phase of the sampling clock pulse is put in order every horizontal scannings.

Therefore, concerning to a spurious component due to a holding of a sampling frequency, that is, a moire noise, the phase thereof is put in order every horizontal scannings, so that the interruption of the spurious component is visually reduced and becomes not marked. Meanwhile, it is possible that instead of the synchronous signal (b), another synchronous signal, which has the same phase as the synchronous signal S and is shown as a waveform (b') in Fig.3, is used, further that the M.M.13 is omitted and the output signal of the separator 12 is directly supplied to the oscillator 14 and the clock counter 15.

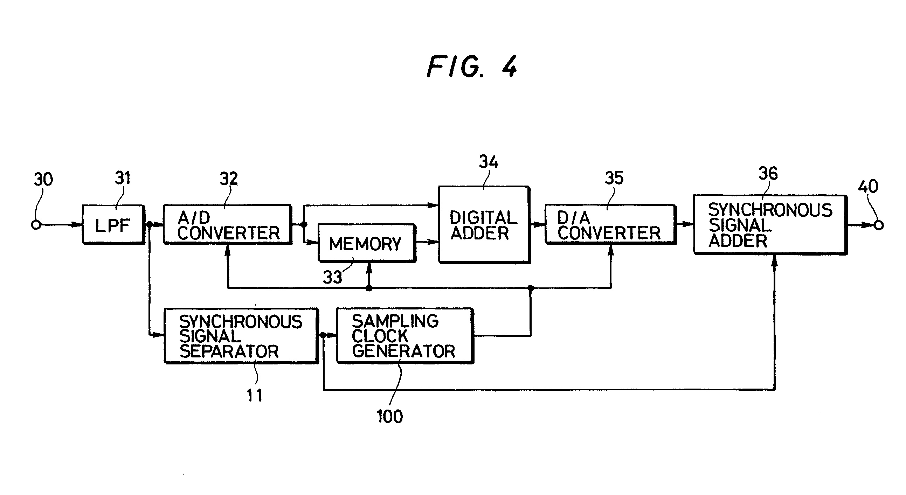

Next, a digital type comb-filter using the sampling clock generator described above will be explained. Referring to Fig.4, the numerals 30 and 40 denote an input terminal of the video signal and an output terminal of a comb filter processed video signal, respectively. The numeral 100 denote the sampling clock generator described above. The numeral 31 designates a low pass filter (hereinafter, LPF), which restricts a band of the input video signal in order to suppress a generation of the spurious component. An output signal of the LPF31 is converted to a digital signal by an analog to digital (hereinafter, A/D) converter 32.

Further, the output signal of the LPF31 is supplied to the separator 11, so that the synchronous signal is separated from it. By using the synchronous signal, the sampling clock generator 100 outputs the sampling clock pulse as mentioned above.

The numeral 33 denotes a line memory constructed by a shift register, etc., to and from which the output signal of the A/D converter 32 is sequentially stored and read by using the sampling clock pulse. The capacity of the line memory 33 is determined the same one as the digitalized video signal corresponding to the period T shown in Fig.3. Further, as the generator 100 generates the sampling clock pulse during the period T from the same start point A every horizontal scannings, an output signal surely delayed one horizontal scanning period can be obtained from the line memory 33, even if the input video signal has the time base fluctuation.

The delayed output signal from the line memory 33 and the output signal of the A/D converter 32 are added by an adder 34, an output signal of which is converted to an analog signal by a digital to an analog (hereinafter, D/A) converter 35. As the sampling clock pulse from the generator 100 is not generated except the period T, that is, not output during the horizontal blanking period, the output signal of the D/A converter 35 does not contain a horizontal blanking signal and a horizontal synchronous signal.

Therefore, a synchronous signal adder 36 adds the synchronous signal from the separator 11 to the output signal of the D/A converter 35, so that a proper video signal processed by a comb filter is delivered to the output terminal 40.

The comb filter of this embodiment reduces the spurious interruption sharply. As a result, it becomes possible to mitigate a cut-off characteristic of the LPF 31, so that a waveform distortion of the video signal due to a delay distortion of the LPF 31 can be lightened.

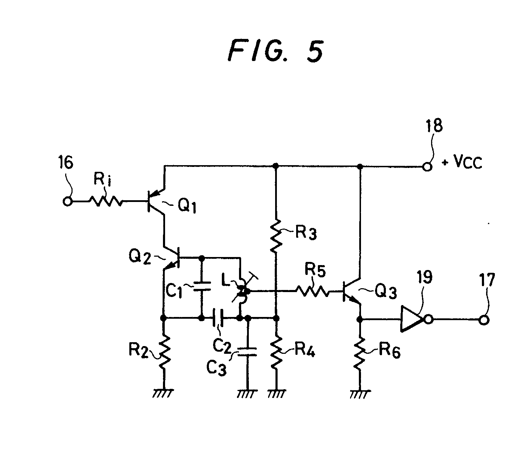

Fig.5 shows another embodiment of an oscillator concerning to the generator 100. Referring to Fig.5, the numerals 16, 17, 18 and 19 denote an input terminal, an output terminal, a power source terminal and an inverter, respectively. A Colpitts oscillator is constructed by a transistor Q2, condensers C1 and C2 and an inductance L. As the start pulse from the M.M.13 shown in Fig.2 is supplied to the input terminal 16, the transistor Q1 becomes "OFF" in the case that the start pulse is "H" and ceases an oscillation. In response to the transition from "H" to "L" of the start pulse, the transistor Q1 becomes "ON", so that the oscillator starts to oscillate and an oscillating output signal can be obtained from a transistor Q3 during a "L" period of the start pulse. An output signal of the transistor Q3 is delivered through the inverter 19, which is used to shape the output signal, to the output terminal 17, and supplied to the clock counter 15 shown in Fig.2.

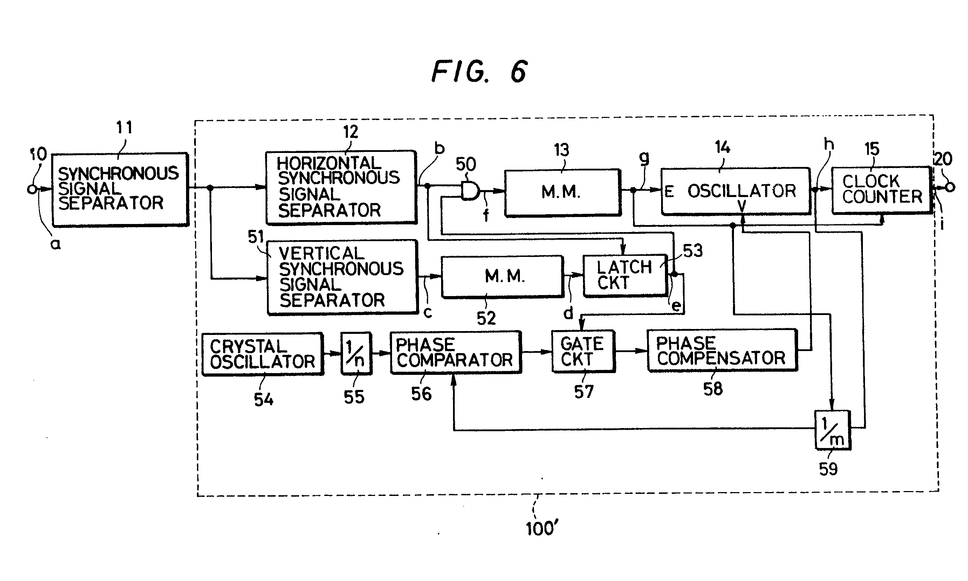

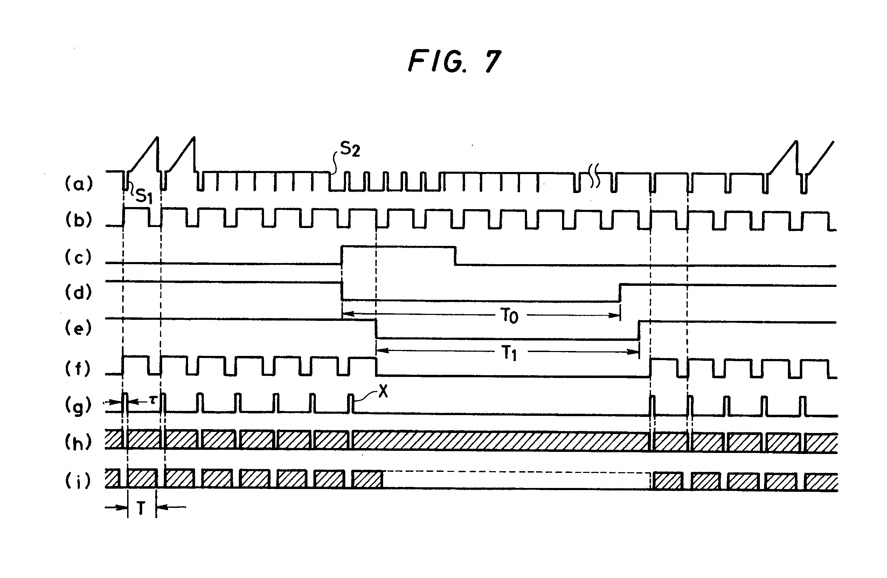

Apparently from the description mentioned above, the frequency of the sampling clock pulse in the embodiments shown in Figs.2 and 5 is determined by the oscillating frequency of the oscillator 14, which has a problem that the oscillating frequency varies in response to a variation of a power source voltage, a variation of an environmental temprature, or a time aging of circuit parts. Another embodiment shown in Fig.6 can cancel this problem and constantly produce a sampling clock pulse having a stable and fixed frequency. Referring to Fig.6, the numeral 100' denotes another sampling clock pulse generator. and the same reference numerals are used to designate the same members as those shown in Fig.2. As the oscillator 14, a voltage controlled oscillator has to be used. For this purpose, the above mentioned IC (SN74S124N) can be used, because the IC has a voltage control input terminal (V), too. The numerals 50 to 59 denote an AND gate, a vertical synchronous signal separator, a M.M., a latch circuit, a crystal oscillator, a l/n divider, a phase comparator, a gate circuit, a phase compensator and a l/m divider, respectively. Fig.7 shows waveforms (a) to (i) concerning to the parts of the sampling clock pulse generator 100'. The waveform (a) depicts the video signal supplied to the input terminal 10, and S1 and S2 denote the synchronous signal separated by the separator 11. The wave forms (b) and (c) show the horizontal synchronous signal and a vertical synchronous signal separated by the separators 12 and 51, respectively. The M.M. 52 is triggered by the vertical synchronous signal and produces an output signal having a fixed pulse width To corresponding to the vertical blanking period of the input video signal, which is shown as the waveform (d). The output signal is supplied to the latch circuit 53, and synchronized with a trailing edge of the output signal of the separator 12. The latch circuit produces an output signal having a "L" state during a period T1 from the trailing edge, as shown as the waveform (e). At the AND gate 50, the output signal of the separator 12 is gated by the output signal of the latch circuit. The M.M. is triggered by an output signal of the AND gate 50, and produces start pulses which are shown as the waveform (g). As a result, the start pulses are not produced during the period T1 corresponding to the vertical blanking period.

The start pulses are supplied to the enable terminal E of the oscillator 14, and as mentioned above, an oscillating output signal synchronized with the start pulses is produced from the oscillator 14. Parts having oblique lines within the waveform (h) show a oscillating period of the oscillator 14. Apparently from the waveform (h), during the period T1, the oscillator 14 continues the oscillation which is triggered by the start pulse indicated by X in the waveform (g).

According to this embodiment, the oscillator 14 is controlled by a phase locked loop circuit (hereinafter PLL circuit) during the period T1, so that the oscillation thereof would be stabilized. That is, by using the output signal of the crystal oscillator 54 as a reference signal having a stable frequency and constructing the PLL circuit with the circuit elements 55 to 59 and the oscillator 14, the output signal of the oscillator 14 is phase-synchronized with the reference signal

The output signal of the crystal oscillator is divided by the l/n divider 55, and the output signal of the l/n divider 55 is supplied to one terminal of the phase comparator 56. To another terminal of the phase comparator 56, an output signal of the l/m divider 59 which divides the output terminal oscillator 14 is supplied. The l/m divider 59 is reset by the start pulse from the M.M. 13. The phase comparator 56 supplies a phase error signal corresponding to a phase difference of both the divided signals. Controlled by the output signal of the latch circuit 53, the gate circuit 57 passes the phase error signal during the period T1. As a result, the phase error signal is supplied to the phase compensator 58 only during the period T1, and the phase error signal is held by the phase compensator during a remaining period. The phase compensator 58 is constructed by an integrator, etc..
The phase error signal is sufficiently smoothed and compensated so as to surely stabilize the characteristic of the PLL circuit. The output signal of the phase compensator 55 is supplied to the voltage control input terminal (V).

With the PLL type feedback control described above, the oscillating output signal of the oscillator 14 is phase synchronized with the stable reference signal generated from the crystal oscillator 54. An oscillating frequency fo thereof is shown by the following formula:

$$fo = m/n \; f1. \quad (1)$$

Here, f1 is an oscillating frequency of the reference signal. The frequency fo is freely determined by the dividing values m and n, and the frequency f1, and does not have any deviation from a set value. Further, the frequency of the reference signal has a constant value, it is possible to shorten the phase distance between the reference signal, that is, to make the dividing value m near to 1, and the maximum value of the phase distance at the phase lock-in is only one period of the oscillating output signal, so that it is possible to obtain a sufficient response speed, the phase fluctuation does not almost occur, and even if it might occur, it is a little. Further, as the phase of the oscillating output signal is instantaneously put in order to the synchronous signal of the input video signal, the affect thereof is reduced sharply.

The oscillating output signal of the oscillator 14 is supplied to the clock counter 15 and in the same manner as mentioned above, the sampling clock pulse, which is useful for processing the input video signal every horizontal scanning lines can be obtained at the output terminal 20. Further, as shown as the waveform (i) in Fig. 7, it is possible that the sampling clock pulse is not output during the period T1 in some cases.

In the aforementioned embodiments, the conventional horizontal and vertical synchronous signals are used as the synchronous signal. However, it is possible to apply this invention to another types of synchronous signals, for example, an horizontal synchronous information allotted to every two horizontal scannings, which is used in a high defined video signal, and two horizontal synchronous informations, one of which is for a luminance signal and another of which is for a chrominance signal, allotted to every horizontal scanning, which is used in a 8mm video camera.

Next, another embodiment of this invention, which is applied to an apparatus for correcting a time base fluctuation of the video signal, will be explained. In an apparatus for recording/reproducing an information on a magnetic tape like a video tape recorder (hereinafter, VTR), or an apparatus for reproducing an information from an optical disc like a video disc player (hereinafter, VDP), a reproduced video signal has the time base fluctuation. This time base fluctuation becomes causes to a jitter and a skew in a reproduced picture. The following embodiment is very useful for removing them.

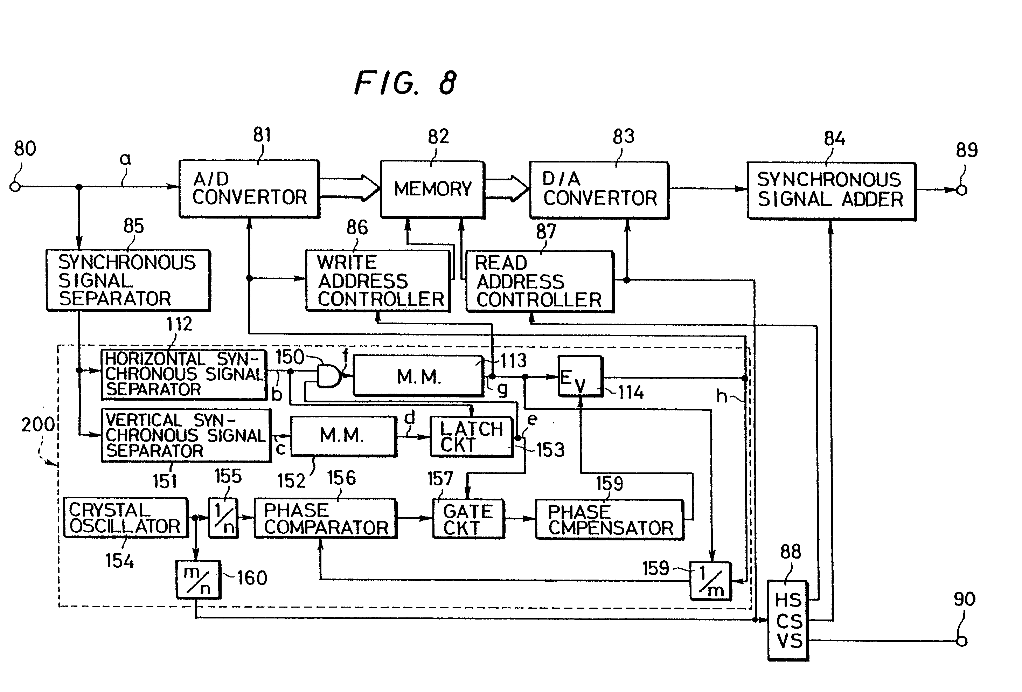

Referring to Fig.8, the numerals 80 and 89 denote an input terminal of the video signal having the time base fluctuation and an output terminal of a corrected video signal, respectively. The numeral 81 designates an A/D converter and the numeral 82 indicates a memory, like a RAM. A synchronous signal separator 85 separates a synchronous signal having the time base fluctuation, which is supplied to a write clock generator 200. The write clock generator 200 generates write clock pulses having a time base fluctuation coincided with the one of the synchronous signal. A write address controller 86 produces write addresses in response to the write clock pulses. Accordingly, the video signal having the time base fluctuation is converted to a sequential digital signal synchronized with the write clock pulses by the A/D converter 81, and the sequential digital signal is written on the memory 82 in response to the write addresses. The write clock generator 200 has almost the same construction as the sampling clock generator 100' shown in Fig.6. Referring to the clock generator 200, the numerals 112 to 114 and 151 to 159 correspond to the numerals 12 to 14 and 51 to 59 shown in Fig.6. The numeral 160 designates a m/n divider.

As described above, the oscillator 114 produces the write clock pulses having the frequency fo shown as the formula (1). Needless to say, this write clock pulses have the same characteristic as the sampling clock pulses according to the embodiment shown in Fig.6. The write address controller 86 receives the start pulse produced by the M.M. 113 together with the write clock pulses. The write address controller 86, which is constructed by a counter, etc., starts to count the write clock pulses by the start pulse which is generated every horizontal scanning periods, and supplies a write address signal to the memory 82 in response to a counted number during the period T shown in the waveform (b) in Fig. 3. Further, this address signal is renewed by the start pulse one by one, so that the output signal of the A/D converter 81 is sequentially written on the memory 82.

Meanwhile, the reference signal produced by the crystal oscillator 154 is divided by the m/n divider 160, the output of which is supplied to a read address controller 87 and a D/A converter 83 as read clock pulses. A frequency $f_R$ of the read clock pulses is shown by the following formula:

$$f_R = m/n \, f1. \qquad (2)$$

Clearly from both the formulas (1) and (2), the frequency $f_R$ of the read clock pulses becomes equal to the frequency fo of the write clock pulses.

A reference synchronous signal generator 88 recieves the read clock pulses, divides them properly, and produces a reference synchronous signal CS having the same format as the synchronous signal of the input video signal, a start pulse HS having the same timing as the one of the start pulse shown as the waveform (c) in Fig. 3, and a reference vertical synchronous signal VS. A read address controller 87, which is constructed by a counter, etc., starts to count the read clock pulses by the start pulse HS, and supplies a read address signal for the memory 82 in response to a counted number during the period T. The read address signal is renewed by the start pulse HS one by one, so that the momorized video signal is sequentially read from the memory 52 and supplied to the D/A converter 83.

Apparently from the above explanation, the output signal of the D/A converter 83 does not have the horizontal blanking signal and the synchronous signal. So, a synchronous signal adder 84 adds the reference synchronous signal CS to the output signal of the D/A converter. Further, the vertical synchronous signal VS is supplied to an terminal 90, and is used as a reference signal to a servo circuit, which is not shown in Fig.8. Meanwhile, as the frequencies fo and $f_R$ are controlled by the PLL circuit to become the same, only the time base fluctuation of the input video signal is eliminated. Further, the write clock pulses is produced by instantaneously synchronized with the synchronous signal of the input video signal, so that the write clock generator 200 is not thrown into confusion, even if the time base fluctuation rapidly generates like the skew, and produces the stable write clock pulses surely following to any kind of the time base fluctuations.

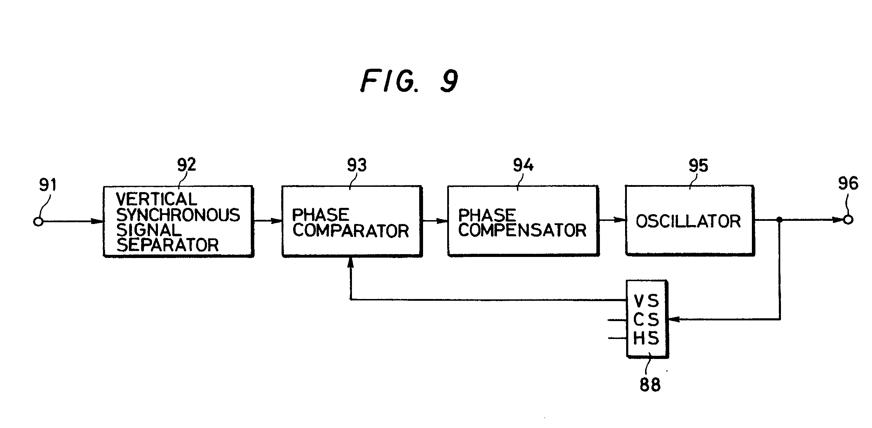

In this embodiment, the reference synchronous signal CS is produced by the generator 88. However, it is possible to use an automatic phase controller ( hereinafter, APC) shown in Fig.9, in order to synchronize the reference synchronous signal with an external reference synchronous signal. Referring to Fig.9, the generator 88 generates the signals CS, VS and HS. An input terminal 91 receives the external reference synchronous signal. A vertical synchronous signal separator 92 separates the vertical synchronous signal of the external reference synchronous signal. This vertical synchronous signal is phase-compared with the signal VS produced by the generator 88 by a phase comparator 93, which generates an error signal in response to a phase difference between both of them. The error signal is supplied through a phase compensator 94 to a control terminal of an oscillator 95. The oscillator 95 produces the reference signal having the oscillating frequency f1.

As a result, the internal reference vertical synchronous signal VS of the reference synchronous signal generator 88 is phase-locked in to the external reference vertical synchronous signal. Accordingly, as the oscillator 95 is used instead of the crystal oscillator 154 shown in Fig.8, it becomes possible to synchronize the apparatus for correcting the time base fluctuation with the external reference vertical synchronous signal.

As mentioned above in details, according to the present invention, it becomes possible to obtain the sampling clock pulses for sampling and processing the video signal without the frequency deviation by instantaneously synchrorizing them with the video signal, so that the time base fluctuation due to the quantization of the video signal could be prevented and the picture inferiority, i.e. the spurious interruption could be minimized. Further, even if there is the time base fluctuation within the video signal, it becomes possible to stably obtain the sampling clock pulses accurately following it without the frequency deviation and to surely eliminate the time base fluctuation without a figure distortion.

## Claims

1. A method for controlling an oscillating system wherein an oscillation signal for a video signal processor is derived, comprising the steps of:

   generating said oscillation signal for said video signal processor;

   generating an internal reference signal having a fixed frequency;

   separating a synchronous information from a video signal having an image information period and a non-image information period;

   phase-comparing said oscillation signal with said internal reference signal to produce a phase-error signal; and

   time-share-controlling

   an oscillation frequency of said oscillation signal in response to said phase error signal during said non-image information period and

   a phase of said oscillation signal in response to the separated synchronous information during said image period.

2. A control circuit for an oscillator (14) whose oscillation signal is used for processing a video signal having an image information period and a non-image information period, comprising:

   a generator (54) for generating an internal reference signal having a fixed frequency;

   a sync-separator (12) for separating a synchronous information from said video signal;

   a phase-comparator (56) for phase-comparing said oscillation signal with said internal reference signal to produce a phase-error signal; and

   a time-share-controller (53, 50, 57)

   for controlling an oscillation frequency of said oscillation signal in response to said phase error-signal during said non-image information period and

   for controlling a phase of said oscillation signal in response to the separated synchronous information during said image period.

3. A control circuit according to claim 2, characterized in that said time-share-controller comprises an AND-gate (50), a latch circuit (53) and a gate circuit (57).

4. A control circuit according to any of the claims 2 or 3, characterized in that said oscillator (14) is a voltage controlled oscillator.

5. A control circuit according to any of the claims 2 to 4, characterized in that said oscillation signal controls an A/D convertor (81) and a write address controller (86), and said reference signal or a divided signal thereof controls a read address controller (87) and a D/A convertor (83).

6. A control circuit according to claim 5, characterized in that said A/D convertor (81) is followed by a memory (82) which is followed by said D/A convertor (83) wherein said memory (82) is supplied with signals from said write address controller (86) as well as with signals from said read address controller (87).

7. A control circuit according to any of the claims 2 to 6, characterized in a generator (88) which generates signals CS, VS and HS from said reference signal wherein said signal CS is supplied to a synchrous signal adder, said signal HS is supplied to said said read address controller (87) and said signal VS is an output signal.

8. A control circuit according to claim 7, characterized in that said generator (88) is part of an automatic phase controller wherein a vertical synchronous signal is phase-compared with said signal VS by a phase comparator (93) which supplies an error signal through a phase compensator (94) to a control terminal of an oscillator (95) which produces an oscillating frequency.

9. A control circuit according to any of the claims 2 to 8, characterized in that said separator includes a horizontal synchronous signal separator (12), an output signal of which is supplied to said oscillator (14), and a vertical synchronous signal separator (51), an output signal of which is supplied to said latch circuit (53).

**Revendications**

1. Procédé pour commander un système oscillant, dans lequel un signal d'oscillation pour un processeur de signaux vidéo est obtenu, comprenant les étapes consistant à:
   produire ledit signal d'oscillation pour ledit processeur de signaux vidéo;
   produire un signal de référence interne possédant une fréquence fixe;
   séparer une information synchrone, d'un signal vidéo possédant une période contenant une information d'image et une période ne contenant aucune information d'image;
   comparer les phases dudit signal d'oscillation et dudit signal de référence interne pour produire un signal d'erreur de phase; et
   commander d'une manière partagée dans le temps
   une fréquence d'oscillation dudit signal d'oscillation en réponse audit signal d'erreur de phase pendant ladite période ne contenant aucune information d'image, et
   une phase dudit signal d'oscillation en réponse à l'information synchrone séparée présente pendant ladite période d'image.

2. Circuit de commande pour un oscillateur (14), dont le signal d'oscillation est utilisé pour traiter un signal vidéo possédant une période contenant une information d'image et une période ne contenant aucune information d'image, comprenant:
   un générateur (54) servant à produire un signal de référence interne possédant une fréquence fixe;
   un séparateur de synchronisation (12) servant à séparer une information de synchronisation, dudit signal vidéo;
   un comparateur de phase (56) servant à comparer les phases dudit signal d'oscillation et dudit signal de référence interne pour produire un signal d'erreur de phase; et
   un dispositif (53,50,57) pour réaliser une commande partagée dans le temps
   pour commander une fréquence d'oscillation du signal d'oscillation en réponse audit signal d'erreur de phase pendant ladite période ne contenant aucune information d'image, et

pour commander une phase dudit signal d'oscillation en réponse à l'information synchrone séparée présente pendant ladite période d'image.

3. Circuit de commande selon la revendication 2, caractérisé en ce que ledit dispositif réalisant une commande partagée dans le temps comprend une porte ET (50), un circuit de verrouillage (53) et un circuit de porte (57).

4. Circuit de commande selon l'une quelconque des revendications 2 ou 3, caractérisé en ce que ledit oscillateur (14) est un oscillateur commandé par la tension.

5. Circuit de commande suivant l'une quelconque des revendications 2 à 4, caractérisé en ce que ledit signal d'oscillation commande un convertisseur analogique/numérique (81) et un dispositif (86) de commande d'adresses d'enregistrement, ledit signal de référence ou un signal, qui en est dérivé, commande un dispositif (87) de commande des adresses de lecture et un convertisseur numérique/analogique (83).

6. Circuit de commande selon la revendication 5, caractérisé en ce qu'en aval du convertisseur analogique/numérique (80) est branchée une mémoire (82), en aval de laquelle est branché ledit convertisseur numérique/analogique (83), ladite mémoire (82) étant alimentée par des signaux délivrés par le dispositif (86) de commande d'adresses d'enregistrement ainsi que par des signaux délivrés par ledit dispositif (87) de commande d'adresses de lecture.

7. Circuit de commande selon l'une quelconque des revendications 2 à 6, caractérisé par un générateur (88) qui produit des signaux CS, VS et HS à partir dudit signal de référence, ledit signal CS étant envoyé à un additionneur de signal synchrone, ledit signal HS étant envoyé audit dispositif (87) de commande des adresses de lecture et ledit signal VS étant un signal de sortie.

8. Circuit de commande selon la revendication 7, caractérisé en ce que ledit générateur (88) fait partie d'un dispositif de commande automatique de phase, dans lequel la phase d'un signal synchrone vertical est comparée à celle dudit signal VS par un comparateur de phase (93) qui envoie un signal d'erreur, par l'intermédiaire d'un compensateur de phase (94), à une borne de commande d'un oscillateur (95) qui produit une fréquence d'oscillation.

9. Circuit de commande selon l'une quelconque des revendications 2 à 8, caractérisé en ce que ledit séparateur comprend un séparateur (12) du signal synchrone horizontal, dont un signal de sortie est envoyé audit oscillateur (14), et un séparateur (51) du signal synchrone vertical, dont un signal de sortie est envoyé audit circuit de verrouillage (53).

**Patentansprüche**

1. Verfahren zum Steuern eines oszillierenden Systems, wobei ein Oszillationssignal für einen Videosignalprozessor abgeleitet ist, wobei das Verfahren die Schritte aufweist:

   Erzeugen des Oszillationssignals für den Videosignalprozessor;

   Erzeugen eines internen Referenzsignals mit einer festen Frequenz;

   Trennen einer synchronen Information von einem Videosignal mit einer Bildinformationsperiode und einer Informationsperiode für kein Bild;

   Phasenvergleichen des Oszillationssignals mit dem internen Referenzsignal zum Erzeugen eines Phasenfehlersignals; und

   Zeitteilungssteuern

      einer Oszillationsfrequenz des Oszillationssignals in Antwort auf das Phasenfehlersignal während der Informationsperiode für kein Bild und

      einer Phase des Oszillationssignals in Antwort auf die getrennte Synchroninformation während der Bildperiode.

2. Steuerschaltkreis für einen Oszillator (14), dessen Oszillationssignal zum Verarbeiten eines Videosignals mit einer Bildinformationsperiode und einer Informationsperiode für kein Bild benutzt wird, wobei der Steuerungsschaltkreis aufweist:

   einen Generator (54) zum Erzeugen eines internen Referenzsignals mit einer festen Frequenz;

   einen Sync-Separator (12) zum Trennen einer Synchroninformation von dem Videosignal;

   einen Phasenkomparator (56) zum Phasenvergleichen des Oszillationssignals mit dem internen Referenzsignal zum Erzeugen eines Phasenfehlersignals; und

einen Zeitaufteilungskontroller (53, 50, 57)

   zum Steuern einer Oszillationsfrequenz des Oszillationssignals in Antwort auf das Phasenfehlersignal während der Informationsperiode für kein Bild und

   zum Steuern einer Phase des Oszillationssignals in Antwort auf die getrennte Synchroninformation während der Bildperiode.

3. Steuerungsschaltkreis nach Anspruch 2, dadurch gekennzeichnet, daß der Zeitaufteilungskontroller ein UND-Gatter (50), einen Latch-Schaltkreis (53) und einen Gatterschaltkreis (57) aufweist.

4. Steuerungsschaltkreis nach einem der Ansprüche 2 oder 3, dadurch gekennzeichnet, daß der Oszillator (14) ein spannungsgesteuerter Oszillator ist.

5. Steuerungsschaltkreis nach einem der Ansprüche 2 bis 4, dadurch gekennzeichnet, daß das Oszillationssignal einen A/D-Wandler (81) und einen Schreibadreßkontroller (86) steuert, und daß das Referenzsignal oder ein davon geteiltes Signal einen Leseadreßkontroller (87) und einen D/A-Wandler (83) steuert.

6. Steuerungsschaltkreis nach Anspruch 5, dadurch gekennzeichnet, daß der A/D-Wandler (81) von einem Speicher (82) gefolgt wird, der durch den D/A-Wandler (83) gefolgt wird, wobei der Speicher (82) mit Signalen von dem Schreibadreß-Kontroller (86) und auch von Signalen von dem Leseadreß-Kontroller (87) versorgt wird.

7. Steuerungsschaltkreis nach einem der Ansprüche 2 bis 6, gekennzeichnet durch einen Generator (88), der Signale CS, VS und HS aus dem Referenzsignal erzeugt, wobei das Signal CS einem Synchronsignal-Addierer zugeführt wird, das Signal HS dem Leseadreß-Kontroller (87) zugeführt wird und das Signal VS ein Ausgangssignal ist.

8. Steuerungsschaltkreis nach Anspruch 7, dadurch gekennzeichnet, daß der Generator (88) ein Teil eines automatischen Phasenkontrollers ist, wobei ein vertikales Synchronsignal mit dem Signal VS durch einen Phasenkomparator (93) phasenverglichen wird, der ein Fehlersignal durch einen Phasenkompensator (94) einem Steuerungsanschluß eines Oszillators (95) zuführt, der eine oszillierende Frequenz erzeugt.

9. Steuerungsschaltkreis nach einem der Ansprüche 2 bis 8, dadurch gekennzeichnet, daß der Separator einen horizontalen Synchronsignal-Separator (12) enthält, von dein ein Ausgangssignal dem Oszillator (14) zugeführt wird, und einen vertikalen Synchronsignal-Separator (51) enthält, von dem ein Ausgangssignal dem Latch-Schaltkreis (53) zugeführt wird.

# FIG. 1

## FIG. 2

100

10 — a

11 SYNCHRONOUS SIGNAL SEPARATOR

12 HORIZONTAL SYNCHRONOUS SIGNAL SEPARATOR — b

13 M.M. — c

14 E OSCILLATOR — d

15 CLOCK COUNTER — e

20

## FIG. 3

(a) S — A — T — B

(b)

(c) τ

(d)

(e)

(b')

EP 0 138 164 B1

## FIG. 4

EP 0 138 164 B1

FIG. 5

## FIG. 6

EP 0 138 164 B1

# FIG. 7

EP 0 138 164 B1

FIG. 8

EP 0 138 164 B1

## FIG. 9